# EUROPEAN PATENT SPECIFICATION

(11) **EP 0 495 788 B1**
(45) Date of publication and mention of the grant of the patent: **02.11.1995**
(21) Application number: 90912809.2
(22) Date of filing: 29.08.1990
(51) Int. Cl.: C10M 159/24, C23F 11/16, C08K 5/42

(54) **COATING COMPOSITIONS**
BESCHICHTUNGSZUSAMMENSETZUNGEN
COMPOSITIONS DE REVETEMENT

(30) Priority: 30.08.1989 GB 8919598
(43) Date of publication of application: 29.07.1992
(73) Proprietor: EXXON CHEMICAL PATENTS INC., Florham Park New Jersey 07932 (US); PRODUITS CHIMIQUES AUXILIAIRES ET DE SYNTHESE, 91160 Longjumeau (FR)
(72) Inventor: D'ASCANIO, Vincenzo, Maria, F-75017 Paris (FR); LUCIEN, Michel, F-76300 Sotteville-les-Rouen (FR); DE CROOCQ, Serge, F-13500 Martigues (FR); MEDINGER, Luc, F-29200 Brest (FR)
(74) Representative: Bawden, Peter Charles
(86) International application number: GB9001334
(87) International publication number: WO9103533

(56) References cited:
- GB-A- 2 210 891
- US-A- 3 372 114
- US-A- 4 086 170
- US-A- 4 541 939
- US-A- 4 541 940
- US-A- 4 880 550

## Description

This invention is directed to an improved 1-step process for the preparation of overbased calcium sulfonate greases and thickened compositions. The greases and thickened compositions of the present invention are of the heretofore known thixotropic type which comprise advantageously, a volatile and/or nonvolatile liquid carrier or solvent, such as, for example, Varsol or mineral spirits, or a mineral oil or equivalent oil medium in their production, and oil-soluble calcium sulfonates derived from oil-soluble higher molecular weight sulfonic acids, which greases and thickened compositions also contain calcium carbonate as calcium ;in colloidal or extremely finely divided form.

Thixotropic greases or thickened overbased calcium sulfonate compositions having corrosion-inhibiting properties, and having utility for a variety of uses such as, for instance, in automobile and truck body undercoatings, and for various other purposes, are known to the art and are disclosed in various publications and patents, illustrative of which are U.S. Patent Nos. 3,242,079; 3,372,115; 3,376,222; 3,377,283; 3,3523,898; 3,661,622; 3,671,012; 3,746,643; 3,370,895; 3,816,310, and 3,492,231; and Canadian Patent No. 949,055. Such greases or thickened compositions have gone into quite widespread use either as, such, or admixed with other ingredients to produce compositions for use in a variety of environments, and, generally speaking, they are characterized by reasonably good E.P. and antiwear properties, high dropping points, reasonably good resistance to mechanical breakdown, salt spray and water-corrosion resistance, thermal stability at high temperatures, and other desirable properties, as described in the aforesaid patents. Such heretofore known greases or thickened compositions are conventionally prepared by what is known as a 2-step process, as more particularly shown in the aforesaid U.S. Patents Nos. 3,242,079; 3,372,115; and 3,492,231. They have also been prepared by what is known as a 1-step process and as is shown, for instance, in the aforementioned U.S. Patents Nos. 3,671,012; 3,746,643; and 3,816,310; and Canadian Patent No. 949,055, which also disclose heretofore known 2-step processes.

In the 2-step process, as shown particularly in U.S. Patents Nos. 3,242,079; 3,372,115; and 3,492,231, as referred to above, there is initially prepared, by way of illustration, a Newtonian solution by admixing a normally liquid oil, commonly a mineral oil or a mixture comprising a mineral oil and a non-mineral oil volatile organic solvent, usually a hydrocarbon solvent such as hexane, with a normally liquid sulfonic acid comprising or containing an aliphatic straight or branched chain having at least 12 carbon atoms but preferably having a molecular weight in the range of about 370 to about 700, to which are added calcium oxide and/or calcium hydroxide and with a so-called promoter which serves to produce an overbased calcium sulfonate which commonly may have a metal ratio of at least 4.5, usually substantially higher, and the resulting mixture is heated, under conditions of agitation, and then carbonated. This results in a Newtonian solution containing the overbased calcium sulfonate dissolved or colloidally dispersed in the mineral oil or the like, which solution is then filtered to form a clear solution. The resulting clear Newtonian solution, produced in this first step, is then subjected to treatment by a second step which involves generally vigorous admixing, and usually heating, said first-step produced solution with a so-called converting agent which may for instance, be water, or water-soluble alcohols or glycol ethers such as methylcellosolve (mono-methyl ether of ethylene glycol), or mixtures of water and such alcohols; or water-soluble acids, such as acetic acid or propionic acid, which second step results in converting the Newtonian solution to non Newtonian disperse system in the form of a grease or a thickened composition.

The 1-step process of forming the greases or thickened compositions differs from the 2-step process in that, in the 1-step process, generally speaking, essentially all of the ingredients are mixed together and then carbonated, and there is no separately formed, or separately formed and recovered. Newtonian solution of an overbased calcium sulfonate dissolved or colloidally dispersed in mineral oil or other suitable liquid medium or carrier. From an economic standpoint, the 1-step process has a definite advantage over the 2-step process, but the 1-step process has not gone into commercial use to nearly the extent that has been the case with the 2-step process because the 1-step process has been characterized by numbers of significant disadvantages.

U.S. Patent No. 3,746,643 discloses a 1-step process of preparing thixotropic overbased calcium sulfonate greases and rust-inhibiting compositions wherein small amounts of water and an alcohol are incorporated into a mixture of a nonvolatile diluent oil, a calcium carbonate complex, and an oil-soluble calcium sulfonate complex dispersing agent. In said mixture, the calcium sulfonate dispersing agent is stated to range from about 2 to about 65 wt%; the nonvolatile diluent oil is stated to range from about 5 to 80 wt%; the calcium carbonate complex is stated to range from about 1 to about 25 wt%; and the water and alcohol are stated to range from about 1 to about 6 wt%, and from about 1 to about 40 wt%, respectively. In addition, the mixture of said ingredients is stated to include, optionally, up to 60 wt% of a volatile processing solvent. The resulting mixture of ingredients is then stated to be heated under controlled conditions to convert the mixture to a grease or rust-inhibiting composition (when cut back with a light hydrocarbon solvent). The patent points out that, to obtain the desired products, the mixture must be heated to a temperature exceeding 50°C (122°F), and that it is necessary in traversing the temperature zone from about 50°C (122°F) to about 100°C (212°F) that the rate of temperature increase not exceed a certain maximum limit where the amount of water present in the mixture is less than 2.5 moles of water per mole of calcium metal present as the carbonate complex.

U.S. Patent No. 3,671,012 discloses a 1-step process of preparing thixotropic overbased calcium sulfonate greases and grease-like compositions. This is disclosed more particularly in Column 6, lines 40 to the bottom of the page, extending through Columns 7 and 8 and through line 25 in column 9. The procedure described in U.S. Patent No. 3,671,012 is generally similar to that shown in U.S. Patent No. 3,746,643 except that the disclosure in U.S. Patent No. 3,671,012 is in greater detail than is described in U.S. Patent No. 3,746,643.

U.S. Patent No. 3,816,310 is generally similar in its disclosure of known 1-step processes to the 1-step process disclosed in the above referred to U.S. Patents Nos. 3,746,643 and 3,671,012. Taking as illustrative the 1-step process as described in U.S. Patent No. 3,816,310 as there described in a typical or illustrative embodiment, an admixture is formed consisting essentially of an oil-soluble sulfonic acid or an oil-soluble calcium sulfonate as a dispersing agent, e.g. linear or branched chain "NAB" Bottoms or a C₁₅-C₁₈ linear alkylbenzene sulfonic acid; liquid medium or carrier material, for instance, a mineral oil; a C₁-C₃ alkanol, for instance, methyl alcohol; calcium oxide and/or calcium hydroxide; and water; then carbonating the resulting admixture with carbon dioxide while maintaining the temperature below about 165°F to the extent that at least 1.5 moles of the carbon dioxide per mole of the calcium as calcium carbonate are present in the mixture; and then heating the carbonate admixture to a temperature above 212°F, said heating step being characterized in that the time required to heat to 212°F is from about 0.5 to about 8 hours, the process being characterized further in that, alternatively, the water utilized initially may be added after the carbonation step or just prior to the heating step after the carrying out of the carbonation step.

One of the main problems with such prior known and practised 1-step processes was that of the unpredictability as to whether the grease or thickened products obtained would or would not be at least reasonably satisfactory for commercial usage. Reasonably satisfactory and commercially usable greases and thickened compositions were obtainable in less than 50% of the cases where the then-known 1-step processes were carried out to produce the desired greases or thickened compositions. Efforts to ascertain why certain batches of greases or thickened compositions were suitable whereas others were not successful despite the fact that considerable studies and experimental work were expended in such efforts.

United Kingdom Patent 2146348 describes an alleged improvement in these processes involving the use of a mixture of volatile and non-volatile solvents, together with a water soluble or water miscible aliphatic carboxylic acid containing up to 4 carbon atoms or an aromatic carboxylic acid as a promoter. This process is said to produce a non-Newtonian product in which the calcium is predominantly in the calcite form.

United Kingdom Patent 2210891 describes the manufacture of thixotropic overbased calcium sulphonates from feedstocks which may be mixtures of linear or branched chain sulphonates.

United States Patent 4086170 describes the manufactures of calcium sulphonates from sulphonic acids whose alkyl group have molecular weight of about 250 to 2000.

We have now developed a 1-step process for the production of thixotropic calcium sulphonate which does not require the use of any acid promoter and which also gives a product with improved performance particularly sprayability to give an improved film with enhanced salt fog performance.

The present invention therefore provides a process for the production of thixotropic basic calcium sulphonate comprising carbonating a mixture of:
1. A C₁ to C₄ alcohol.
2. A volatile organic hydrocarbon solvent.
3. Calcium oxide or calcium hydroxide.
4. Optionally water.
5. A blend of alkyl aryl sulphonic acids selected from sulphonic acids derived from 3 to 90wt% of C₁₂ bottoms, 5 to 45wt% C₂₄ branched chain alkyl benzene and 2 to 30wt% C₁₈ straight chain alkyl benzene, provided that the distribution of alkyl groups in the blend spans at least from C₁₂ to C₂₄.

We have found that by using such a blend of alkyl aryl sulphonic acids improved thixotropic calcium sulphonate may be obtained without the need for a promoter. The sulphonic acids may be obtained by sulphonating a mixture of the alkylates mentioned above, or may be obtained by blending the sulphonic acids themselvies. Without being limited to such it is believed that using the mixture of the acids enables the improved product to be obtained since the sulphonic acid based on C₁₂ bottoms product based on C₁₈ linear alkylate enhances the drying of an anticorrosion composition based on the product of the invention and the C₂₄ chains acid the adhesion of the composition.

The term "sulphonic acid or sulphonates", as used herein, refers to those sulphonates wherein the hydrocarbon portion of the molecule has a molecular weight in the range of about 300 to about 1,000. Preferably, for calcium sulphonate where one molecule contains sulphonate groups, this molecular weight is in the range of about 900 to about 1,200. These sulphonic acids or sulphonates can be either synethetic sulphonates or the so-called mahogany or natural sulphonates. The term "mahogany sulphonates" is believed to be well understook, since it is amply described in the literature. The term "synthetic sulphonates" refers to those sulphonates which are derived from sulfonation feedstocks which are prepared synethetically. The synthetic sulphonates include alkyl sulphonates and alkaryl sulphonates. The alkaryl radical can be derived from benzene, toluene, ethyl benzene, xylene isomers, or naphthalene. Preferably, the alkyl groups are branched chain. Mixtures of sulphonates derived from alkaryl hydrocarbons having straight-chain alkyl groups and alkaryl hydrocarbons having branched-chain alkyl groups are particularly useful.

An example of still another synthetic alkaryl sulphonate, which is particularly useful for preparing colloidal dispersions, is the sulphonate derived from a sulfonation feedstock which I refer to as "NAB Bottoms". NAB Bottoms are predominantly di-n-alkaryl, wherein the alkyl groups contain from eight to 18 carbon atoms. They distinguish primarily from the preceding sulfonation feedstocks in that they are straight-chain and contain a large amount of di-substituted material.

Other sulphonates which can be used include, for example, mono- and poly-wax substituted naphthalene sulphonates, dinonyl naphthalene sulphonates, napthalene disulfide sulphonates, dicetyl thianthrene sulphonates, dilauryl betanaphthol sulphonates, unsaturated paraffin wax sulphonates, hydroxy substituted paraffin wax sulphonates, tetramylene sulphonates, cyclo-aliphatic sulphonates, such as lauryl-cyclohexyl sulphonates, mono- and poly-wax substituted cyclohexyl sulphonates, and the like.

In a normal process we first charge the methanol and then the hydrocarbon solvent is added to the reactor and mixed with the calcium hydroxide/methanol suspension maintaining the temperature constant. Sulphonic acid is then slowly charged to the reactor whose temperature is adjusted in the range of 20 to 30°C.

After water addition, this product is then carbonated at 30 to 60°C. The reaction heat is 28.3 Kcal/mole of CO₂. The total quantity of carbon dioxide should be injected at a constant feed rate in a minimum of time (2-4 hours). Typically a carbonation time of 2 hours is optimum.

Carbonation is continued until from 70 to 90% preferably 80 wt% of the stoichiometric quantity of CO₂ has been absorbed. CO₂ injection should be stopped at this point.

The basic Calcium Sulphonate of this invention may be used in coating compositions such as wax polymer based coatings and, in polymer based anticorrosion coatings for metals where the basic calcium sulphonate can contribute to the adhesion of the coating to metal. These improved corrosion inhibiting coating formulations may be applied as hot melts to be used mainly in automotive cavity and underbody protection. These coatings meet automotive industry requirements by combining thixotropic overbased sulphonate of consistent quality, natural resin, natural or synthetic waxes or polymers.

The present invention is illustrated by the following Examples:

### Example 1

Basic calcium sulphonate was produced by the following process.

The following amounts of material were placed into the reactor:

| | |
|---|---|
| Calcium oxide | 10.9 wt% |
| Methanol | 21.19 wt% |
| White spirit | 31.78 wt% |
| A mixture of sulphonic acid | 17.48 wt% |
| Toluene | 10.59 wt% |
| Water | 3.71 wt% |

The components were mixed thoroughly at a temperature of 30°C. Carbon dioxide was then introduced to give a total of 4.55 parts carbon dioxide based on the weight of the initial charge introduced over a 2 hour period at a rate of 144 grams per minute of carbon dioxide.

Due to the exotherm of the reaction the temperature was raised from 30 to 60°C.

An additional 20kgs of white spirit were added and the temperature increased to 100°C and the pressure reduced to 150mm of mercury to remove the volatile materials.

The product obtained had the following properties:

| | | |
|---|---|---|
| COLOUR | 5 | ASTM D1500 |
| 50 MICRON FILM APPEAR | DRY, YELLOW | |
| NON VOLATILE, %WT | 51 | |
| WHITE SPIRIT, %WT | 46 | |
| TBN, MG KOH/G | 213 | ASTM D2896 |
| SEDIMENTS, %VOL | 0.5 | AM S77081 |
| WATER, %WT | 0.5 | ASTM D95 |
| INFRARED CRYSTALS | CALCITE | |
| VISCOSITY SE PA | 7.5 | |
| RESIDUAL MPA.S VISCOSITY | 8.4 | |
| DELTA MPA.S THIXOTROPY | 1.5 | |
| BROOKFIELD N.4/3RPM AT 25°C | 7000 | |
| CALCIUM SULPHONATE, %WT | 25 | ASTM D3712 |
| SEDIMENT < 30 MICRON, %VOL | 83 | |
| SEDIMENT < 15 MICRON, %VOL | 28 | |
| CA CONTENT, %WT | 12 | AM.S 28020 |
| FLASH POINT, PM C | 41 | ASTM D93 |

The product was tested as an anticorrosion coating in the "Salt Fog Test" + sag resistance with the following results vis a vis a standard commercial product:

| | DFT | Invention | Std Commercial Product |
|---|---|---|---|
| Salt Fog, hrs* (Product) | (40 pm) | 120 | 72 |
| | (60 pm) | 360 | 120 |
| | (80 pm) | 410 | 240 |
| Sag resistance °C (Pure Product) | | 180 | 180 |

| | | | |
|---|---|---|---|
| (*) measured as time at which coated metal plates showed the first point of rust. | | | |

## Claims

1. A process for the production of thixotropic basic calcium sulphonate comprising carbonating a mixture of:
1. A C₁ to C₄ alcohol.
2. A volatile organic hydrocarbon solvent.
3. Calcium oxide or calcium hydroxide.
4. Optionally water.
5. A blend of alkyl aryl sulphonic acids selected from sulphonic acids derived from 3 to 90 wt% of C₁₂ bottoms, 5 to 45 wt% C₂₄ branched chain alkyl benzene and 2 to 30 wt% C₁₈ straight chain alkyl benzene, provided that the distribution of alkyl groups in the blend spans at least from C₁₂ to C₂₄.

2. A process according to claim 1 in which the C₁ to C₄ alcohol is methanol.

3. A process according to claim 1 or claim 2 in which the volatile hydrocarbon solvent is toluene.

4. A process according to any of claims 1 to 3 in which the volatile hydrocarbon solvent is a mixture of toluene and white spirit.

5. Thixotropic basic calcium sulphonate whenever produced by a process of any of claims 1 to 4.

6. The use of thixotropic calcium sulphonate according to claim 5 as in anticorrosion coatings for metal.

7. A blend of thixotropic calcium sulphonate according to claim 5 with wax and/or polymers.

## Patentansprüche

1. Verfahren zur Herstellung von thixotropem basischen Calciumsulfonat, bei dem eine Mischung aus
1. einem C₁- bis C₄-Alkohol,
2. einem flüchtigen organischen Kohlenwasserstofflösungsmittel,
3. Calciumoxid oder Calciumhydroxid,
4. gegebenenfalls Wasser,
5. einer Mischung von Alkylarylsulfonsäuren ausgewählt aus Sulfonsäuren, die von 3 bis 90 Gew.% C₁₂-Sumpfprodukten, 5 bis 45 Gew.% verzweigtkettigem C₂₄-Alkylbenzol und 2 bis 30 Gew.% geradkettigem C₁₈-Alkylbenzol mit der Maßgabe, daß die Verteilung der Alkylgruppen in der Mischung sich mindestens von C₁₂ bis C₂₄ erstreckt, abgeleitet sind,
mit Kohlendioxid umgesetzt wird.

2. Verfahren nach Anspruch 1, bei dem der C₁- bis C₄-Alkohol Methanol ist.

3. Verfahren nach Anspruch 1 oder Anspruch 2, bei dem das flüchtige Kohlenwasserstofflösungsmittel Toluol ist.

4. Verfahren nach einem der Ansprüche 1 bis 3, bei dem das flüchtige Kohlenwasserstofflösungsmittel eine Mischung aus Toluol und White Spirit (Testbenzin) ist.

5. Thixotropes basisches Calciumsulfonat, das nach einem Verfahren gemäß einem der Ansprüche 1 bis 4 hergestellt ist.

6. Verwendung von thixotropem Calciumsulfonat nach Anspruch 5 als Antikorrosionsbeschichtung für Metall.

7. Mischung von thixotropem Calciumsulfonat nach Anspruch 5 mit Wachs und/oder Polymeren.

## Revendications

1. Procédé de production d'un sulfonate de calcium basique thixotrope, comprenant la carbonatation d'un mélange :
1. d'un alcool en C₁ à C₄
2. d'un solvant hydrocarboné organique volatile
3. d'oxyde de calcium ou d'hydroxyde de calcium
4. facultativement, d'eau
5. d'un mélange d'acides alkylarylsulfoniques choisis entre des acides sulfoniques dérivés de 3 à 90 % en poids de résidus en C₁₂, de 5 à 45 % en poids d'un alkylbenzène à chaîne ramifiée en C₂₄ et de 2 à 30 % en poids d'un alkylbenzène à chaîne droite en C₁₈, sous réserve que la distribution des groupes alkyle dans le mélange s'étende au moins de C₁₂ à C₂₄.

2. Procédé suivant la revendication 1, dans lequel l'alcool en C₁ à C₄ est le méthanol.

3. Procédé suivant la revendication 1 ou la revendication 2, dans lequel le solvant hydrocarboné volatil est le toluène.

4. Procédé suivant l'une quelconque des revendications 1 à 3, dans lequel le solvant hydrocarboné volatil est un mélange de toluène et de white-spirit.

5. Sulfonate de calcium basique thixotrope, produit par un procédé suivant l'une quelconque des revendications 1 à 4.

6. Utilisation d'un sulfonate de calcium thixotrope suivant la revendication 5 dans des revêtements anti-corrosion pour un métal.

7. Mélange d'un sulfonate de calcium thixotrope suivant la revendication 5 et d'une cire et/ou de polymères.
